# EUROPEAN PATENT SPECIFICATION

(11) **EP 2 493 164 B1**
(45) Date of publication and mention of the grant of the patent: **19.10.2016**
(21) Application number: 12151450.9
(22) Date of filing: 17.01.2012
(51) Int. Cl.: H04M 1/725, G06K 19/077, G09G 3/34

(54) **Communications system providing device status information based upon near field communication (nfc) and related methods**
Vorrichtungsstatusinformationen bereitstellendes Kommunikationssystem auf Grundlage von Nahfeldkommunikation (NFC) und verwandte Verfahren
Système de communication fournissant des informations sur l'état d'un dispositif en fonction d'une communication de champ proche et procédés apparentés

(30) Priority: 24.02.2011 US 201113033819
(43) Date of publication of application: 29.08.2012
(73) Proprietor: BlackBerry Limited, Waterloo, ON N2K 0A7 (CA)
(72) Inventor: Deluca, Michael Joseph, Rolling Meadows, IL Illinois 60008 (US); Gray, Robert Cary, Sunrise, FL Florida 33323 (US); Goldberg, Arthur Michael, Sunrise, FL Florida 33323 (US)
(74) Representative: Noble, Nicholas

(56) References cited:
- JP-A- 2007 140 677
- JP-A- 2010 216 932
- US-A1- 2004 119 681
- US-A1- 2007 176 912
- US-A1- 2010 052 909
- US-B1- 7 457 760
- Motorola: "The Motorola MC9500-K intelligent battery", Internet , 2009, XP002677753, Retrieved from the Internet: URL:http://www.motorola.com/web/Business/_ Documents/MC9500K/Static_files/MC9500-K-Ba ttery-Mgmt-Tech-Brief-0909_FINAL.pdf [retrieved on 2012-06-08] & E Ink: "MC9500-K Intelligent Battery by Motorola", Internet , 2012, Retrieved from the Internet: URL:http://www.eink.com/customer_showcase_ mc9500-k.html [retrieved on 2012-06-15]

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.
JP2007-140677 discloses a memory card for grasping record content or spare capacity. An electronic paper and a jog dial are installed in a main body, and the index information of a file recorded in a memory card is displayed on the electronic paper. Also, when the rotating operation of a jog dial is performed, single frame step is operated, and when the pressing operation of the jog dial is performed, it is switched to the display of the spare capacity and the display of a residual battery.
"The Motorola MC9500-K Intelligent Battery", 2009, and "MC9500-K Intelligent Battery by Motorola", 2012, disclose a battery with an integrated display that provides state of charge and state of health of the battery.
US 2004/119681 discloses a system for centrally controlling and messaging electrically active displays distributed at a single site or at multiple sites.
US 2010/052909 discloses an RFID tag including a sensor for determining a transient state or condition of a product to which the tag is associated, and a display. The tag may be passive, semi-passive, or active.
JP 2010 216932 discloses a battery including a microcapsule-type electrophoretic display part disposed at a position visible from the outside. The display part changes by the change of an applied voltage caused by a voltage change according to the remaining capacity of the battery.
US 2007/176912 discloses a portable memory device having a flexible polymeric display panel which comprises a memory controller configured to determine memory information from a memory coupled to the memory controller, generate memory information signals in dependence on the determined memory information and output the memory information signals to a display driver.
US 7457760 discloses a method of using digital electronic paper in the form of a reusable stamp. The user can attach a stamp without a predetermined postage to an article to be mailed. The stamp has a top layer having a visual display, middle layer having an electronics layer, and a bottom layer having an adhesive layer. The stamp is encoded such that the visual display of the stamp is altered to indicate a state of the stamp.

### Brief Description of the Drawings

FIG. 1 is a schematic block diagram of a communications system in accordance with an example embodiment.
FIG. 2 is another schematic block diagram of the communications system of FIG. 1 showing the front exterior surfaces of the first and second electronic devices.
FIG. 3 a schematic block diagram of a communications system in accordance with another example embodiment.
FIG. 4 is another schematic block diagram of the communications system of FIG. 3 showing the front exterior surfaces of the first and second electronic devices.
FIG. 5 is a schematic side view diagram of an electronic device in accordance with an example embodiment.
FIG. 6 is a flow diagram illustrating example method aspects associated with the system and devices of FIGS. 1-4.
FIG. 7 is a schematic block diagram illustrating example components of a mobile wireless communications device that may be used in accordance with various implementations.

### Detailed Description

According to the present invention, there is provided an electronic device according to claim 1, a communications system according to claim 6, and a method of displaying information, according to claim 13.
The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communications system is disclosed herein which may include a first electronic device that may include a display comprising an array of pixels. Each pixel may retain a given state between refreshes and without electrical power supplied thereto, for example. The first electronic device may also include a first near-field communications (NFC) device and a first controller coupled to the first NFC device and the display.

The communications system may also include a second electronic device to be removably coupled with the first electronic device and comprising a second NFC device and a second controller coupled thereto, for example. The second controller may be configured to determine status information related to the first electronic device and communicate the status information to the first controller via the first and second NFC devices. The first controller may be configured to display on the display the status information, for example.

The first electronic device may include a first electrical connector coupled to the first controller, and the second electronic device may include a second electrical connector coupled to the second controller. The second electrical connector may be configured to be removably coupled to the first electrical connector, for example.

The first electronic device may include a first housing. The first housing may carry the display, the first NFC device, the first controller, and the first electrical connector, for example. The second electronic device may include a second housing. The second housing may carry the second NFC device, the second controller, and the second electrical connector, for example.

The first electronic device may further include a memory coupled to the first controller. The status information may include usage information of the memory, for example.

The first electronic device may further include a power source coupled to the first controller, for example. The power source may be a battery, and the status information may include status information of the battery, for example.

The battery may be a rechargeable battery, for example. The second electronic device may include a rechargeable battery charger. The first NFC device, the display, and the first controller may be configured to be remotely powered.

The first electronic device may further include a substrate supporting the display and the first NFC device. The first electronic device may also include an adhesive layer carrying the substrate. The second electronic device may include a second display coupled to the second controller.

A related electronic device may include a display comprising an array of pixels, with each pixel retaining a given state between refreshes and without electrical power supplied thereto. The electronic device may further include a wireless receiver coupled to the display and configured to receive a wireless signal. The display may be configured to display data thereon based upon the received wireless signal. The wireless receiver and the display may also be configured to be powered by a field received by said wireless receiver.

A related method aspect directed to a method of displaying status information related to the first electronic device. The method may include determining the status information using a second electronic device to be removably coupled with the first electronic device and comprising a second NFC device, and communicating the status information from the second electronic device to the first electronic device via the first and second NFC devices. The method may also include displaying on the display the status information.

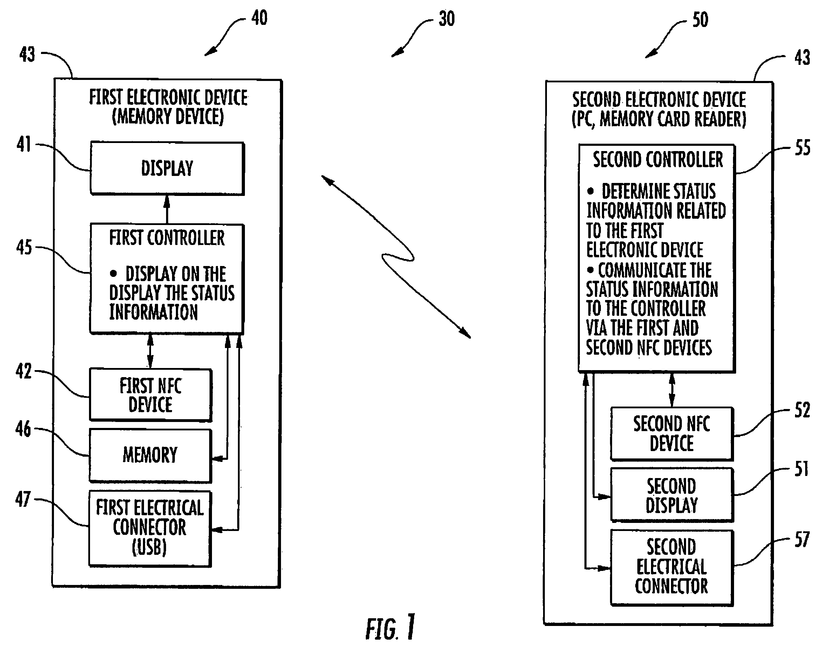

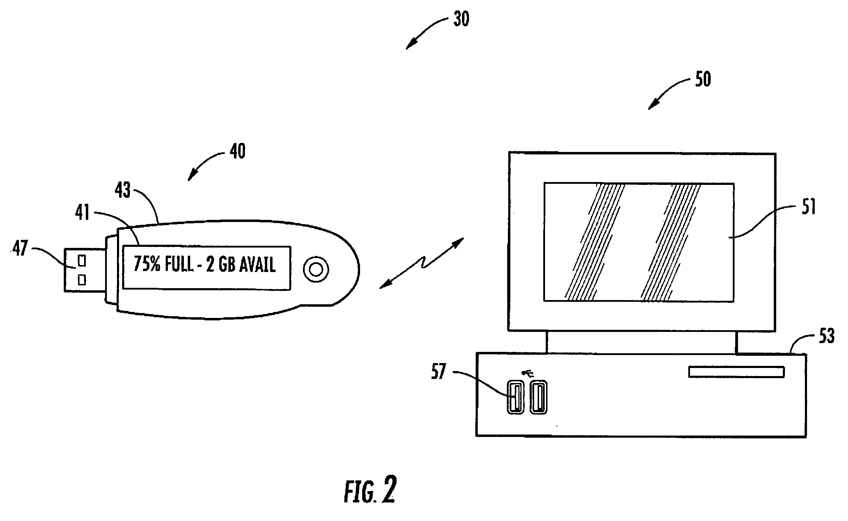

Referring initially to FIGS. 1-2, a communications system 30 illustratively includes a first electronic device 40. In the illustrated example embodiment, the first electronic device 40 is a universal serial bus (USB) memory drive, or thumb drive (See FIG. 2). The first electronic device 40 illustratively includes a first housing 43 and a display 41 carried by the housing. The display 41 includes an array of pixels. Each pixel of the array retains a given state between refreshes and retains the given state without electrical power supplied thereto, thereby maintaining a persistent image with without requiring a constant driving power source. In other words, the display 41 may comprise a bistable display, for example. The display 41 may comprise electronic paper, e-paper, an electronic ink, e-ink, gyricon, electrophoretic, electrowetting or electrofluidic display, for example. Indeed, the display 41 generally mimics the appearance of ordinary ink on paper, and unlike a more conventional flat panel, or active display, which typically uses a backlight to illuminate its pixels, the display reflects light like ordinary paper, for example. The display **41** may be a color display as well as a black and white or monochrome version in some embodiments. Also, color pixels may be used together with black and white pixels to simulate a mixed color display, for example.

The first electronic device **40** also includes a first near-field communications (NFC) device **42** carried by the housing **43.** By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The first electronic device **40** also includes a first electrical connector **47** carried by the housing **43.** In the illustrated embodiment, the first electrical connector **47** is illustratively a male USB connector for mating with a female USB connector (FIG. 2), for example that may be found on a portable or personal computer. The first electrical connector **47** may be another type of electrical connector, for example, a mini-USB connector.

The first electronic device **40** also includes a memory **46** carried by the housing **43.** The memory **46** may be non-volatile memory, for example.

The first electronic device **40** also includes a first controller **45** or processor that is carried the housing **43** and coupled to the memory **46,** the first NFC device **42,** the display **41,** and the first electrical connector **47.** The first controller **45** may be implemented using hardware (e.g., memory, etc.) and software components, i.e., computer-readable instructions for causing the first electronic device (i.e. the USB memory device) **40** to perform the various functions or operations described herein.

The communications system **30** also includes a second electronic device **50** that is to be removably coupled to the first electronic device **40.** The second electronic device **50** includes a housing **53.** The second electronic device **50** is illustratively a personal computer (PC) in the example of FIG. 2 and also includes a second NFC device **52** and a second controller **55** coupled thereto, and both of which are carried by the housing **53.** The second electronic device **50** also includes a second display **54** carried by the housing **53.** The second display may be an LCD display or other type of display.

The second electronic device **50** or PC also includes a female USB connector **57** or port carried by the housing **53** and for removably coupling with the male USB connector **47** of the USB memory device **40.** The second electrical connector **57** may be another type of electrical connector that can be removably coupled to first electrical connector **47.**

The second controller **55** is configured to determine status information related to the first electronic device **40** or, more particularly, the memory **46** of the USB memory device. Status information may include capacity and usage information for the memory, for example. The status information may include other information, for example, the name of the drive, file types, or file structure. The status information may be determined based upon device information that may be received when the first and second electronic devices **40, 50** are coupled, for example, via the first and second electrical connectors **47, 57** or USB connector/port. For example, the status information may be determined based upon the file system or structure of data stored in the memory **46.** The file system may be used to determine available space and total capacity of the memory **46,** for example. The status information may be determined using other data from the memory **47** or other portions of the first electronic device **40.** The second controller **55** is configured to communicate the determined status information to the first controller **45** via the first and second NFC devices **42, 52.**

The second controller 55 may determine and communicate the status information based upon a read/write instruction to the memory **46.** Alternatively or additionally, the second controller **55** may determine and communicate that status information periodically. The status information may be determined and communicated based upon other time periods, or may be determined and communicated in a real-time and/or continuous basis, for example.

The first controller **45** is configured to display, on the display **41,** the status information. More particularly, the first controller **45** is configured to display the usage information for the memory **46,** for example, an amount of space used or space remaining. In the illustrated embodiment in FIG. 2, the amount of memory space remaining is 25% (75% Full). The status information may be displayed on the display **41** as text or as a graphical indicator, for example.

The status information advantageously remains on display **41** after the first electronic device **40** is removed from or decoupled from the second electronic device PC **50.** This may be particularly advantageous in determining which one from among a plurality of first electronic devices, for example, USB memory devices, to use for a particular application. For example, suppose a relatively large amount of data is to be downloaded to a USB memory device, the display advantageously provides a visual indication of remaining space on each of the devices, thus eliminating the need to plug in or couple each to see which memory device can accommodate the large amount of data. Thus, time spent determining a suitable memory device is reduced.

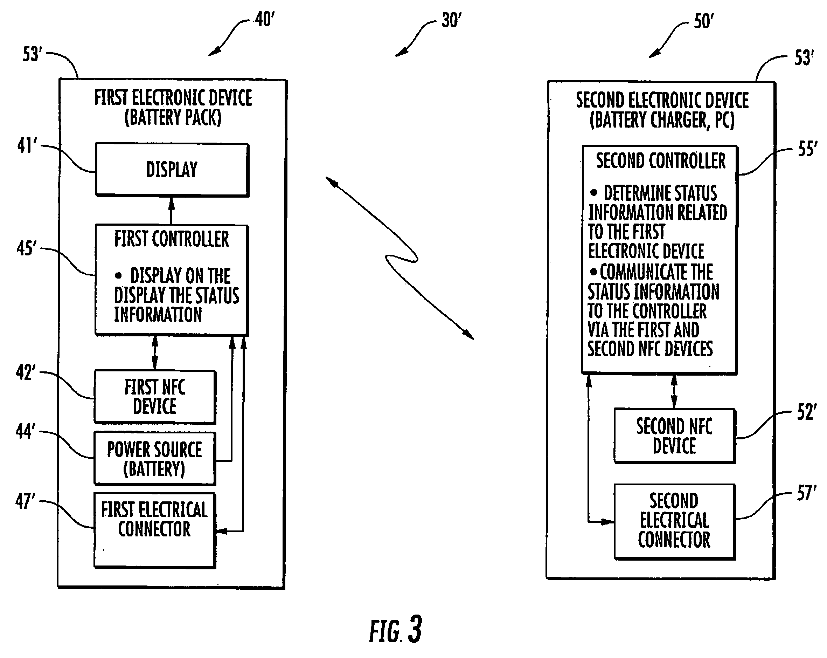

Referring now to FIGS. 3-4, in another example embodiment, the communications system **30'** illustratively includes a first electronic device **40'** that is in the form of a rechargeable battery pack. For example, the rechargeable battery pack may be a mobile device battery pack or laptop computer battery pack. The first electronic device **40'** illustratively includes a housing **43**' and a display **41'** carried by the housing, similar to the display **41** described above.

The first electronic device **40'** also includes a first near-field communications (NFC) device **42'** and a first electrical connector **47'** carried by the housing **43**'. The first electrical connector **47'** may be any type of connector, for example, that may be for coupling to a laptop computer, mobile device, etc. The first electronic device **40'** also includes a power source **44'** or battery. The battery **44'** may be a rechargeable battery, for example, a Lithium Ion (LiIon) battery or a Nickel Metal Hydride (NiMH) rechargeable battery. The rechargeable battery **44'** may be another type of battery. In some example embodiments, the battery may provide power to the first controller **45',** the first NFC device **42',** and the display **41'.**

The first electronic device **40'** also includes a first controller **45'** or processor that is carried the housing **43'** and coupled to the battery **44',** the first NFC device **42',** the display **41',** and the first electrical connector **47'.** The first controller **45'** may be implemented using hardware (e.g., memory, etc.) and software components, i.e., computer-readable instructions for causing the first electronic device **40'** to perform the various functions or operations described herein, for example, managing the power to and from the battery **44'.**

The communications system **30'** also includes a second electronic device **50'** that is to be removably coupled to the first electronic device **40'.** The second electronic device **50'** is illustratively a rechargeable battery charger, and includes a second NFC device **52'** and a second controller **55'** coupled thereto. The second NFC device **52**' and the second controller **55'** are carried by a housing **53'**.

The second electronic device **50'** also includes a corresponding electrical connector **57**' or port, also carried by the housing **53',** for removably coupling with the first electrical connector **47'** of the first electronic device **40'.** The second electrical connector **57'** may be another type of electrical connector that may be removably coupled to first electrical connector **47'**.

The second controller **55'** is configured to determine status information related to the first electronic device **40'.** Status information may include capacity and usage information for the rechargeable battery **44',** and the condition or health of the rechargeable battery, for example. The status information may include other information. The status information may be determined based upon device information that may be received when the first and second electronic devices **40', 50'** are coupled, for example via the first and second electrical connectors **47', 57'.** For example, the status information may be determined based upon various power values, e.g., a voltage, current, and/or resistance seen by the rechargeable battery charger **50'.** This information may be used to determine the status information about the battery **44'.** The status information may be determined using other data collected from the rechargeable battery **44'** or other portions of the battery pack **40'.** The second controller **55'** is configured to communicate the determined status information to the first controller **45'** via the first and second NFC devices **42', 52'.**

The second controller 55' may determine and communicate the status information based upon a coupling of the rechargeable battery **44'** to the rechargeable battery charger **50',** for example. Alternatively or additionally, the second controller **55'** may determine and communicate that status information periodically. The status information may be determined and communicated based upon other time periods, or may be determined and communicated in a real-time and/or continuous basis, for example.

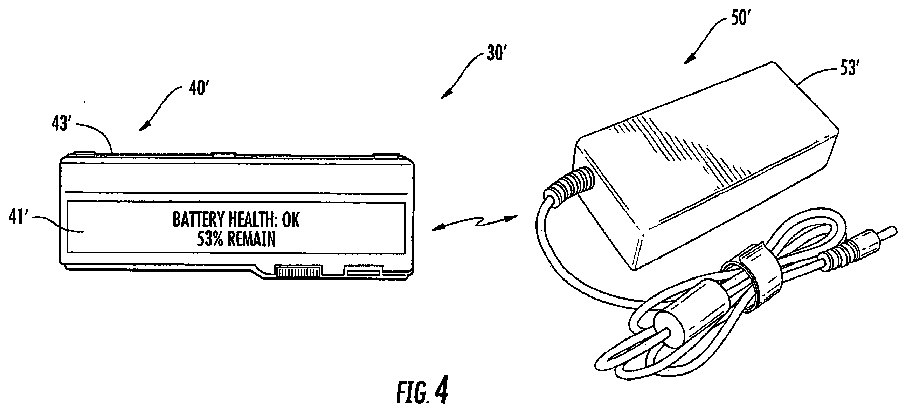

The first controller **45'** is configured to display, on the display **41',** the status information. More particularly, the first controller **45'** is configured to display the usage information for the rechargeable battery **44',** for example, an amount of power or usage time remaining. In the illustrated embodiment in FIG. 4, the amount of power remaining is 53% and the battery health is "ok." The status information may be displayed on the display **41'** as text or as a graphical indicator, for example.

The status information advantageously remains on display **41'** after the rechargeable battery **44'** is removed from or decoupled from the second electronic device **50'**. This may be particularly advantageous in determining which one from among a plurality of batteries to use. For example, suppose at least four hours a laptop computer is desired, the display **41'** advantageously provides a visual indication of how much power remains in each rechargeable battery so that the one with the most, for example, power remaining can be selected. This eliminates the need to plug in or couple each to see which rechargeable batteries can accommodate the desired duration of usage. Thus, time spent determining a suitable rechargeable battery is reduced.

Additionally, in some example embodiments, there may be more than one second electronic device **50'.** By way of example, the first electrical device **40'** may be in the form of a rechargeable battery pack for a mobile phone, for example. The second electronic devices **50'** may be in the form of a rechargeable battery charger and the mobile phone. In other words, the mobile phone may determine and communicate the status of the rechargeable battery when it is coupled to it. When the rechargeable battery is removed and placed on the charger, the status may be determined and updated again. Of course, any number of second electronic devices **50'** may be used to coupled with a given first electronic device **40'.**

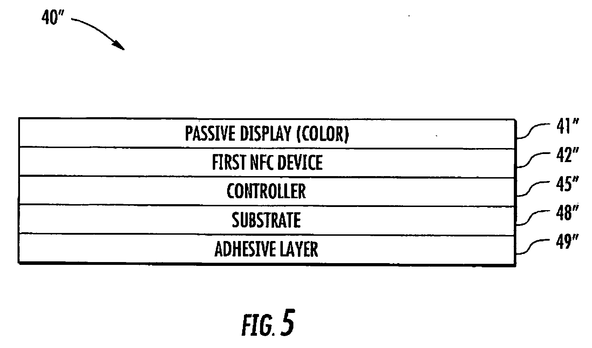

Referring now to FIG. 5, in another exemplary embodiment, an electronic device **40"** includes a substrate **48"** and the display **41"** is carried by the substrate. The substrate **48"** may be a flexible, plastic sheet, for example. In some embodiments, the substrate **48"** may be a rigid sheet or layer and formed from other materials.

The display **41"** is similar to the bistable display described above with respect to FIGS. 1-4 in that each pixel of the array retains a given state between refreshes and retains the given state without electrical power supplied thereto. The display **41"**, by virtue of the substrate **48"** being flexible, for example, may also be flexible.

The first NFC device **42"** and the controller **45"** are also carried by the substrate **48"** and cooperates with the display **41"** to display the status information thereon based upon NFC communications with the second NFC device **52"**. An optional adhesive layer **49"** is also carried by an outer surface of the substrate **48"**. The adhesive layer **49"** may be a pressure sensitive adhesive, for example. The adhesive layer **49"** may include other types of adhesives. A release layer (not shown) may be positioned over the adhesive layer **49"** prior to application of the electronic device **40"** to a desired surface.

The first NFC device **42"**, controller **45"** and the display **41"** are advantageously powered by a field received by the first NFC device **43"**. That is the first NFC device **43"** may be configured as a passive NFC device. For example, the field may be an electromagnetic field, which in some example embodiments may be inclusive of the NFC communications. Being powered by an electromagnetic field, for example, reduces reliance on a separate power source, for example, a battery, or other power source that may be received from a second electronic device when it is coupled to the first electronic device **40"**. It should also be noted that alternate structures for the device of FIG. 5 are anticipated. For example the substrate **48"** may be adjacent to our contained within the bistable display **41"** with the controller **45"** and first NFC device **42"** affixed to the back of the display **41"** or substrate **48"**, with adhesive layer **49"** optionally incorporated into electronic device **40"** depending upon the application.

Indeed, the first electronic device **40"** may be a stand-alone device, which is advantageously configured as a sticker, adhesive note, notepad or other information display device. In one example, electronic device **40"** is configured much like an "electronic" adhesive note. A graphic or text message is composed on the second electronic device, which may be a NFC enabled smart phone. The smart phone is then brought into close proximity with the electronic adhesive note where the NFC link not only communicates the data for rendering the image on display **41"** but also momentary powers the display **41"**, the first NFC device **42"** and the controller **45"**. Controller **45"** then processes the data in order to render the image using power wirelessly communicated from the smart phone over the NFC link. Since the display is bistble, the displayed image can be maintained substantially indefinitely on the electronic adhesive note. Since the smart phone provides all necessary power to modify the display, the electronic adhesive note requires no battery or independent power source and thus may be both cost and sized reduced relative to battery powered display devices. Thus the electronic adhesive note may be thin and inexpensive and placed in any location where the recipient of the intended message may be present. Furthermore, unlike conventional paper adhesive notes which are typically disposed of after use, the display of the electronic adhesive note may be rewritten by subsequent interfaces with smart phones or other types NFC devices. Finally, the data representation of the displayed image may be maintained in non-volatile memory included in the controller **45"**. Should the message recipient also have an NFC enabled smart phone, then the recipient's smart phone could not only be optionally used to composed a reply message for display on the electronic adhesive note, but the data representative of the image may be transferred from the controller to the recipient's smart phone when it forms an NFC link, thereby allowing the recipient's smart phone to maintain a copy of the information displayed on the electronic adhesive note for later use.

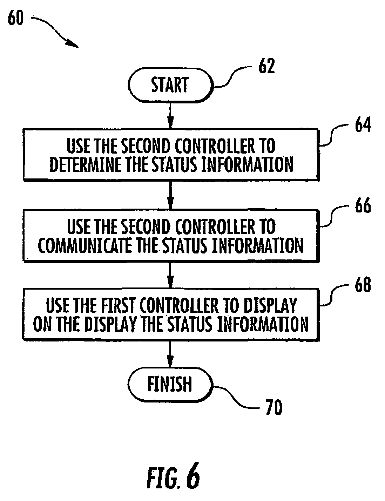

Referring now to the flowchart **60** of FIG. 6, related method aspects are now described. Beginning at Block **62** the method includes using the second controller **55** to determine the status information (Block **64**). At Block **66,** the method includes using the second controller 55 to communicate the status information to the first controller **45** via the first and second NFC devices **42, 52.** The method further includes using the first controller **45** to display **41** on the display the status information at Block **68.** The method ends at Block 70.

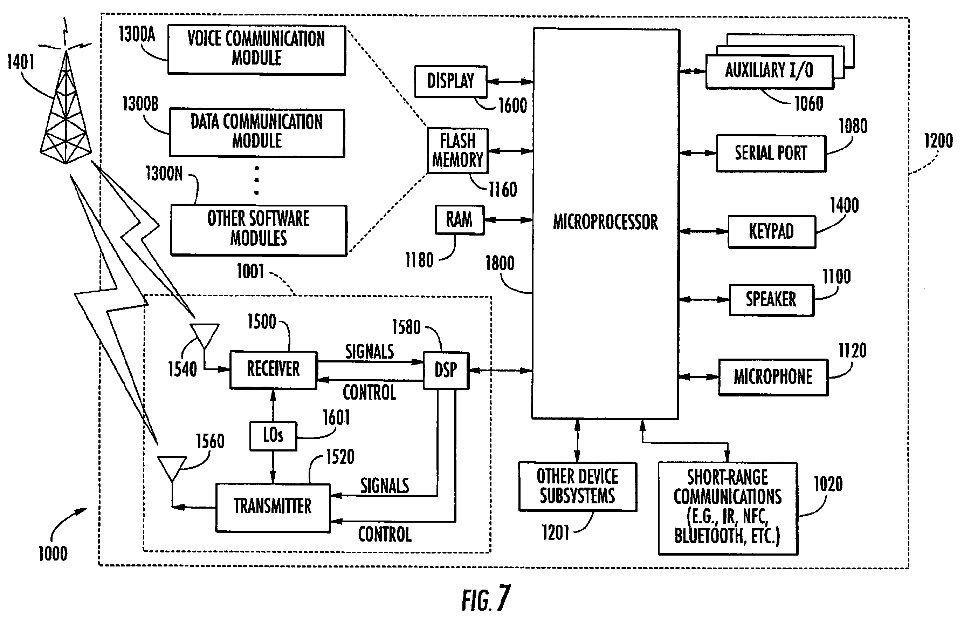

Example components of a mobile wireless communications device **1000** that may be used in accordance with the above-described embodiments are further described below with reference to FIG. 7. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem 1001 designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver 1500 and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display 1600 may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. An electronic device (40") comprising:
a first near-field communications NFC device (42") configured to receive from a second NFC device (52) status information related to the electronic device;
a bistable display (41") adapted to be powered by a field received by the first NFC device (42") to display the status information, the display comprising an array of pixels, each pixel retaining a given state between refreshes and without electrical power supplied thereto; and
a controller (45") coupled to said first NFC device (42") and said display (41"), and configured to display on said display (41") the status information,
wherein the electronic device (40") is adapted to be removably coupled to a second electronic device (50) and, whilst coupled to the second electronic device, to send device information to the second electronic device so as to enable the second electronic device to determine the status information, the second electronic device comprising the second NFC device; and
wherein the bistable display is adapted to continue to display the status information between refreshes without power being supplied thereto.

2. The electronic device of claim 1, further comprising a memory, and wherein the first NFC device is further configured to receive status information related to the memory from the second NFC device.

3. The electronic device of Claim 1, wherein the status information comprises usage information of said memory.

4. The electronic device of claim 1, further comprising:
a power source, wherein the first NFC device is further configured to receive status information related to said power source communicated from the second NFC device and wherein the controller is further coupled to said power source.

5. The electronic device of Claim 4, wherein said power source comprises a battery; and wherein the status information comprises status information of said battery.

6. A communications system (30) comprising:
a first electronic device (40) according to any of claims 1 - 5;
a second electronic device (50) configured to be removably coupled with said first electronic device (40) and comprising a second NFC device (52) and a second controller (55) coupled thereto and configured to determine status information related to said first electronic device (40) and communicate the status information to said first electronic device (40) via said first and second NFC devices (42, 52).

7. The communications system of Claim 6, wherein said first electronic device comprises a first electrical connector coupled to said first controller; and wherein said second electronic device comprises a second electrical connector coupled to said second controller and configured to be removably coupled to said first electrical connector.

8. The communications system of Claim 7, wherein said first electronic device comprises a first housing; wherein said first housing carries said display, said first NFC device, said first controller, and said first electrical connector; wherein said second electronic device comprises a second housing; and wherein said second housing carries said second NFC device, said second controller, and said second electrical connector.

9. The communications system of Claim 6 wherein the first electronic device further comprises a memory coupled to the first controller and the status information comprises usage information for said memory.

10. The communications system of Claim 6, wherein said first electronic device further comprises a battery; and wherein the status information comprises status information of said battery.

11. The communications system of Claim 6, wherein said first NFC device, said display, and said first controller are configured to be remotely powered.

12. The communications system of Claim 6, wherein said first electronic device further comprises a substrate supporting said display, said first NFC device, and said first controller; and an adhesive layer carrying said substrate.

13. A method of displaying status information related to a first electronic device (40), the first electronic device (40) comprising a first near-field communications NFC device (42) and a bistable display (41) powered by a field received by the first NFC device (42) to display the status information, the display comprising an array of pixels, each pixel retaining a given state between refreshes and without electrical power supplied thereto, the method comprising:
determining the status information using a second electronic device (50) to be removably coupled with the first electronic device (40), and the second electronic device (50) comprising a second NFC device (52);
communicating the information from the second electronic device (50) to the first electronic device (40) via the first and second NFC devices (42, 52); and
displaying on the display (41) the status information,
wherein the first electronic device is adapted to be removably coupled to the second electronic device and, whilst coupled to the second electronic device, to send device information to the second electronic device so as to enable the second electronic device to determine the status information; and
wherein the bistable display continues to display the status information between refreshes without power being supplied thereto.

14. The method of Claim 13, wherein the first electronic device further comprises a memory; and wherein the status information comprises usage information of the memory.

15. The method of Claim 13, wherein the first electronic device further comprises a power source.

16. The method of Claim 14, further comprising remotely powering the first NFC device, the display, and a first controller coupled to the first NFC device, the display, and the memory.

## Patentansprüche

1. Eine elektronische Vorrichtung (40") umfassend:
eine erste Nahfeldkommunikations-NFC-Vorrichtung (42"), die konfiguriert ist von einer zweiten NFC-Vorrichtung (52) Statusinformation zu erhalten, die in Bezug mit der elektronischen Vorrichtung steht;
eine bistabile Anzeige (41"), die angepasst ist, um durch ein Feld mit Strom versorgt zu werden, das durch die erste NFC-Vorrichtung (42") erhalten wird, um die Statusinformation anzuzeigen, wobei die Anzeige eine Anordnung von Pixeln umfasst, wobei jedes Pixel einen gegebenen Zustand zwischen Auffrischungen behält und ohne dazu mit Strom versorgt zu werden; und
eine Steuerung (45"), die gekoppelt ist mit der ersten NFC-Vorrichtung (42") und der Anzeige (41"), und konfiguriert ist, um auf der Anzeige (41") Statusinformation anzuzeigen,
wobei die elektronische Vorrichtung (40") angepasst ist, um entfernbar mit einer zweiten elektronischen Vorrichtung (50) gekoppelt zu sein und, während einer Kopplung mit der zweiten elektronischen Vorrichtung Vorrichtungsinformation an die zweite elektronische Vorrichtung zu senden, um der zweiten elektronischen Vorrichtung zu ermöglichen die Statusinformation zu bestimmen, wobei die zweite elektronische Vorrichtung die zweite NFC-Vorrichtung umfasst; und
wobei die bistabile Anzeige angepasst ist, um mit der Anzeige der Statusinformation zwischen Auffrischungen weiterzumachen ohne dazu mit Strom versorgt zu werden.

2. Die elektronische Vorrichtung nach Anspruch 1 ferner umfassend einen Speicher, und wobei die erste NFC-Vorrichtung ferner konfiguriert ist, um Statusinformation von der zweiten NFC-Vorrichtung zu erhalten, die mit dem Speicher in Bezug steht.

3. Die elektronische Vorrichtung nach Anspruch 1, wobei die Statusinformation Nutzungsinformation des Speichers umfasst.

4. Die elektronische Vorrichtung nach Anspruch 1, ferner umfassend:
eine Stromquelle, wobei die erste NFC-Vorrichtung ferner konfiguriert ist, um Statusinformation zu erhalten, die in Bezug steht zu der Stromquelle, die kommuniziert wird von der zweiten NFC-Vorrichtung, und wobei die Steuerung ferner mit der Stromquelle gekoppelt ist.

5. Die elektronische Vorrichtung nach Anspruch 4, wobei die Stromquelle eine Batterie umfasst; und wobei die Statusinformation Statusinformation der Batterie umfasst.

6. Ein Kommunikationssystem (30), umfassend:
eine erste elektronische Vorrichtung (40) nach einem der Ansprüche 1-5;
eine zweite elektronische Vorrichtung (50), die konfiguriert ist, um entfernbar mit der ersten elektronischen Vorrichtung (40) gekoppelt zu sein, und eine zweite NFC-Vorrichtung (52) und eine zweite Steuerung (55) umfasst, die damit gekoppelt ist und konfiguriert ist, um Statusinformation zu bestimmen, die mit der ersten elektronischen Vorrichtung (40) in Bezug steht, und die Statusinformation an die erste elektronische Vorrichtung (40) mittels der ersten und zweiten NFC-Vorrichtungen (42, 52) zu kommunizieren.

7. Das Kommunikationssystem nach Anspruch 6, wobei die erste elektronische Vorrichtung einen ersten elektrischen Verbinder umfasst, der mit der ersten Steuerung gekoppelt ist; und wobei die zweite elektronische Vorrichtung einen zweiten elektrischen Verbinder umfasst, der mit der zweiten Steuerung gekoppelt ist und konfiguriert ist, um entfernbar mit dem ersten elektrischen Verbinder gekoppelt zu sein.

8. Das Kommunikationssystem nach Anspruch 7, wobei die erste elektronische Vorrichtung ein erstes Gehäuse umfasst; wobei das erste Gehäuse die Anzeige, die NFC-Vorrichtung, die erste Steuerung und den ersten elektrischen Verbinder trägt; wobei die zweite elektronische Vorrichtung ein zweites Gehäuse umfasst; und wobei das zweite Gehäuse die zweite NFC-Vorrichtung, die zweite Steuerung und den zweiten elektrischen Verbinder trägt.

9. Das Kommunikationssystem nach Anspruch 6, wobei die erste elektronische Vorrichtung ferner einen Speicher umfasst, der gekoppelt ist mit der ersten Steuerung, und wobei die Statusinformation Nutzungsinformation für den Speicher umfasst.

10. Das Kommunikationssystem nach Anspruch 6, wobei die erste elektronische Vorrichtung ferner eine Batterie umfasst; und wobei die Statusinformation Statusinformation der Batterie umfasst.

11. Das Kommunikationssystem nach Anspruch 6, wobei die erste NFC-Vorrichtung, die Anzeige und die erste Steuerung konfiguriert sind, um aus der Entfernung mit Strom versorgt zu werden.

12. Das Kommunikationssystem nach Anspruch 6, wobei die erste elektronische Vorrichtung ferner ein Substrat umfasst, dass die Anzeige, die erste NFC-Vorrichtung und die erste Steuerung unterstützt; und eine Adhäsionsschicht, die das Substrat trägt.

13. Ein Verfahren zum Anzeigen von Statusinformation, die in Bezug steht zu einer ersten elektronischen Vorrichtung (40), wobei die erste elektronische Vorrichtung (40) eine erste Nahfeldkommunikations-NFC-Vorrichtung (42) umfasst und eine bistabile Anzeige (41), die mit Strom versorgt wird durch ein Feld, das durch die erste NFC-Vorrichtung (42) erhalten wird, um Statusinformation anzuzeigen, wobei die Anzeige eine Anordnung von Pixeln umfasst, wobei jedes Pixel einen gegebenen Zustand zwischen Auffrischungen einnimmt und ohne dazu mit Strom versorgt zu werden, wobei das Verfahren umfasst:
Bestimmen der Statusinformation unter Benutzung einer zweiten elektronischen Vorrichtung (50), die entfernbar mit der ersten elektronischen Vorrichtung (40) gekoppelt ist, und wobei die zweite elektronische Vorrichtung (50) eine zweite NFC-Vorrichtung (52) umfasst;
Kommunizieren der Information von der zweiten elektronischen Vorrichtung (50) an die erste elektronische Vorrichtung (40) mittels der ersten und zweiten NFC-Vorrichtungen (42, 52); und
Anzeigen der Statusinformation auf der Anzeige (41),
wobei die erste elektronische Vorrichtung angepasst ist, um entfernbar mit der zweiten elektronischen Vorrichtung gekoppelt zu sein und, während mit der zweiten elektronischen Vorrichtung gekoppelt, Vorrichtungsinformation an die zweite elektronische Vorrichtung zu senden, um der zweiten elektronischen Vorrichtung ein Bestimmen der Statusinformation zu ermöglichen; und
wobei die bistabile Anzeige mit der Anzeige von Statusinformation zwischen Auffrischungen weitermacht ohne dazu mit Strom versorgt zu werden.

14. Das Verfahren nach Anspruch 13, wobei die erste elektronische Vorrichtung ferner einen Speicher umfasst; und wobei die Statusinformation Nutzungsinformation des Speichers umfasst.

15. Das Verfahren nach Anspruch 13, wobei die erste elektronische Vorrichtung ferner eine Stromquelle umfasst.

16. Das Verfahren nach Anspruch 14, ferner umfassend ein entferntes mit Strom versorgen der ersten NFC-Vorrichtung, der Anzeige und einer ersten Steuerung, die mit der ersten NFC-Vorrichtung, der Anzeige und dem Speicher gekoppelt sind.

## Revendications

1. Dispositif électronique (40") comprenant :
un premier dispositif de communication en champ proche, NFC pour *« Near Field Communication* », (42'') configuré pour recevoir d'un second dispositif NFC (52) des informations d'état liées au dispositif électronique ;
un écran d'affichage bistable (41") conçu pour être alimenté par un champ reçu par le premier dispositif NFC (42") afin d'afficher les informations d'état, l'écran d'affichage comprenant un réseau de pixels, chaque pixel conservant un état donné entre les rafraîchissements, sans qu'il lui soit fourni de l'énergie électrique ; et
un contrôleur (45") couplé audit premier dispositif NFC (42") et audit écran d'affichage (41") et configuré pour afficher les informations d'état sur ledit écran d'affichage (41") ;
dans lequel le dispositif électronique (40") est conçu pour être couplé à distance à un second dispositif électronique (50) et pour, tandis qu'il est couplé au second dispositif électronique, envoyer des informations sur le dispositif au second dispositif électronique, afin de permettre au second dispositif électronique de déterminer les informations d'état, le second dispositif électronique comprenant le second dispositif NFC ; et
dans lequel l'écran d'affichage bistable est conçu pour continuer d'afficher les informations d'état entre les rafraîchissements, sans qu'il lui soit fourni de l'énergie électrique.

2. Dispositif électronique selon la revendication 1, comprenant en outre une mémoire et dans lequel le premier dispositif NFC est en outre configuré pour recevoir du second dispositif NFC des informations d'état liées à la mémoire.

3. Dispositif électronique selon la revendication 1, dans lequel les informations d'état comprennent des informations d'utilisation de ladite mémoire.

4. Dispositif électronique selon la revendication 1, comprenant en outre :
une source d'énergie, dans lequel le premier dispositif NFC est en outre configuré pour recevoir des informations d'état liées à ladite source d'énergie, communiquées par le second dispositif NFC, et dans lequel le contrôleur est en outre couplé à ladite source d'énergie.

5. Dispositif électronique selon la revendication 4, dans lequel ladite source d'énergie consiste en une batterie et dans lequel les informations d'état consistent en informations d'état de ladite batterie.

6. Système de communication (30) comprenant :
un premier dispositif électronique (40) selon l'une quelconque des revendications 1 à 5 ;
un second dispositif électronique (50) configuré pour être couplé de manière amovible audit dispositif électronique (40) et comprenant un second dispositif NFC (52) et un second contrôleur (55) qui lui est couplé et qui est configuré pour déterminer des informations d'état liées audit premier dispositif électronique (40) et pour communiquer les informations d'état audit premier dispositif électronique (40) via lesdits premier et second dispositifs NFC (42, 52).

7. Système de communication selon la revendication 6, dans lequel ledit premier dispositif électronique comprend un premier connecteur électrique couplé audit premier contrôleur et dans lequel ledit second dispositif électronique comprend un second connecteur électrique couplé audit second contrôleur et configuré pour être couplé de manière amovible audit premier connecteur électrique.

8. Système de communication selon la revendication 7, dans lequel ledit premier dispositif électronique comprend un premier boîtier ; dans lequel ledit premier boîtier porte ledit écran d'affichage, ledit premier dispositif NFC, ledit premier contrôleur et ledit premier connecteur électrique ; dans lequel ledit second dispositif électronique comprend un second boîtier ; et dans lequel ledit second boîtier porte ledit second dispositif NFC, ledit second contrôleur et ledit second connecteur électrique.

9. Système de communication selon la revendication 6, dans lequel le premier dispositif électronique comprend en outre une mémoire couplée au premier contrôleur et les informations d'état consistent en des informations d'état sur ladite mémoire.

10. Système de communication selon la revendication 6, dans lequel ledit premier dispositif électronique comprend en outre une batterie et dans lequel les informations d'état consistent en informations d'état sur ladite batterie.

11. Système de communication selon la revendication 6, dans lequel ledit premier dispositif NFC, ledit écran d'affichage et ledit premier contrôleur sont configurés pour être alimentés à distance.

12. Système de communication selon la revendication 6, dans lequel ledit premier dispositif électronique comprend en outre un substrat supportant ledit écran d'affichage, ledit premier dispositif NFC et ledit premier contrôleur et une couche adhésive supportant ledit substrat.

13. Procédé d'affichage d'informations d'état liées à un premier dispositif électronique (40), le premier dispositif électronique (40) comprenant un premier dispositif de communication en champ proche, NFC pour *« Near Field Communication* », (42) et un écran d'affichage bistable (41) alimenté par un champ reçu par le premier dispositif NFC (42) afin d'afficher les informations d'état, l'écran d'affichage comprenant un réseau de pixels, chaque pixel conservant un état donné entre les rafraîchissements, sans qu'il lui soit fourni de l'énergie électrique, le procédé comprenant les étapes consistant à :
déterminer les informations d'état à l'aide d'un second dispositif électronique (50) qui est couplé de manière amovible au premier dispositif électronique (40), le second dispositif électronique (50) comprenant un second dispositif NFC (52) ;
communiquer les informations entre le second dispositif électronique (50) et le premier dispositif électronique (40) via le premier et le second dispositif NFC (42, 52) ; et
afficher les informations d'état sur l'écran d'affichage (41) ;
dans lequel le premier dispositif électronique est conçu pour être couplé à distance au second dispositif électronique (50) et pour, tandis qu'il est couplé au second dispositif électronique, envoyer des informations sur le dispositif au second dispositif électronique, afin de permettre au second dispositif électronique de déterminer les informations d'état ; et
dans lequel l'écran d'affichage bistable continue d'afficher les informations d'état entre les rafraîchissements, sans qu'il lui soit fourni de l'énergie électrique.

14. Procédé selon la revendication 13, dans lequel le premier dispositif électronique comprend en outre une mémoire et dans lequel les informations d'état consistent en information d'utilisation de la mémoire.

15. Procédé selon la revendication 13, dans lequel le premier dispositif électronique comprend en outre une source d'énergie.

16. Procédé selon la revendication 14, comprenant en outre l'étape consistant à alimenter à distance le premier dispositif NFC, l'écran d'affichage et un premier contrôleur couplé au premier dispositif NFC, à l'écran d'affichage et à la mémoire.
